# FASCICULE DE BREVET EUROPEEN

(11) **EP 4 161 885 B1**
(45) Date de publication et mention de la délivrance du brevet: **06.11.2024**
(21) Numéro de dépôt: 21734435.7
(22) Date de dépôt: 02.06.2021
(51) Int. Cl.: C04B 35/571, C04B 35/589, C04B 35/626, C04B 35/628, C04B 35/632, C04B 35/80

(54) **PROCEDE DE FABRICATION D'UNE PIECE EN MATERIAU COMPOSITE A L'AIDE D'UN PROMOTEUR D'ADHESION COMPORTANT UN COMPLEXE OU UN ACIDE DE LEWIS**
VERFAHREN ZUR HERSTELLUNG EINES TEILS AUS EINEM VERBUNDSTOFF UNTER VERWENDUNG EINES HAFTVERMITTLERS MIT EINER LEWIS-SÄURE ODER EINEM KOMPLEX
METHOD FOR MANUFACTURING A PART MADE OF COMPOSITE MATERIAL USING AN ADHESION PROMOTER COMPRISING A LEWIS ACID OR A COMPLEX

(30) Priorité: 09.06.2020 FR 2005989
(43) Date de publication de la demande: 12.04.2023
(73) Titulaire: Safran Ceramics, 33185 Le Haillan (FR); Centre national de la recherche scientifique, 75016 Paris (FR); UNIVERSITE DE BORDEAUX, 33000 Bordeaux (FR); UNIVERSITE DE MONTPELLIER, 34090 Montpellier (FR); Ecole Nationale Supérieure de Chimie de Montpellier, 34296 Montpellier (FR)
(72) Inventeur: EBERLING-FUX, Nicolas, 77550 MOISSY-CRAMAYEL (FR); SCHMIDT, Marion, France, Hélène, 77550 MOISSY-CRAMAYEL (FR); BERNARD, Samuel, Jean-Charles, 87590 SAINT-JUST-LE-MARTEL (FR)
(74) Mandataire: Cabinet Beau de Loménie
(86) Numéro de dépôt international: PCT/FR2021/050998
(87) Numéro de publication internationale: WO 2021/250341

(56) Documents cités:
- WO-A1-2018/229428
- US-A- 5 707 471

## Description

### Domaine Technique

La présente invention concerne un procédé de fabrication d'une pièce en matériau composite à matrice au moins partiellement en céramique ayant des propriétés mécaniques améliorées.

### Technique antérieure

Des pièces en matériau composite à matrice au moins partiellement en céramique peuvent classiquement être obtenues par une technique d'imprégnation et de pyrolyse de polymère (« Polymer Imprégnation and Pyrolysis » ; « PIP »).

Selon une telle technique, une composition liquide d'un polymère précurseur de céramique est introduite dans la porosité d'une préforme fibreuse. La composition ainsi introduite est ensuite polymérisée puis pyrolysée afin de former la phase de matrice céramique. Divers types de matrices céramiques peuvent être formées par cette méthode en fonction du choix du précurseur utilisé. On peut, en particulier, utiliser un polymère polysilazane afin d'obtenir une matrice SiCN, un polymère polycarbosilane afin d'obtenir une matrice SiC ou un polymère polysiloxane afin d'obtenir une matrice SiCO.

Il est habituel de répéter ces cycles d'infiltration et de pyrolyse plusieurs fois de suite afin d'obtenir le taux de porosité souhaité pour la pièce densifiée, étant donné que la transformation en céramique par pyrolyse implique un retrait volumique.

Une des limitations des propriétés mécaniques des pièces ayant une matrice obtenue par une technique PIP provient d'un problème d'adhésion aux interfaces de la matrice PIP.

On connaît par ailleurs la demande WO 2018/229428 qui divulgue l'utilisation de promoteurs d'adhésion silanes pour améliorer l'adhésion entre le renfort fibreux et la matrice céramique.

Il est souhaitable de disposer de nouvelles solutions pour améliorer les propriétés mécaniques présentées par les pièces en matériau composite dont la matrice a été au moins en partie formée par une technique PIP. Il est aussi souhaitable d'améliorer la tenue thermique des matrices formées par technique PIP notamment à des températures de l'ordre de 1500°C.

### Exposé de l'invention

L'invention vise, selon un premier aspect, un procédé de fabrication d'une pièce en matériau composite comprenant au moins les étapes suivantes :
a) introduction d'un promoteur d'adhésion dans la porosité d'une préforme fibreuse formée par des fils revêtus par un revêtement présentant à sa surface des groupements -OH, le promoteur d'adhésion étant un complexe de Lewis ou un acide de Lewis, le promoteur d'adhésion complexe de Lewis comprenant une structure S1 réactive de formule B1-X-H où B1 est une base de Lewis, le promoteur d'adhésion acide de Lewis comprenant une structure S2 réactive de formule X-H avec l'atome X présentant une lacune électronique, dans ces deux alternatives X désigne le bore ou l'aluminium,
b) greffage du promoteur d'adhésion à la surface du revêtement par addition sur les groupements -OH au niveau de l'atome X,
c) introduction d'une résine précurseur de céramique dans la porosité de la préforme fibreuse, après l'étape de greffage du promoteur d'adhésion,
d) polymérisation de la résine introduite et liaison du promoteur d'adhésion greffé à la résine par réaction chimique entre ces deux composés au niveau d'une liaison X-H du promoteur greffé, cette polymérisation et cette liaison étant réalisées par chauffage de la préforme fibreuse dans laquelle a été introduite la résine, et
e) formation d'une phase de matrice céramique dans la porosité de la préforme fibreuse par pyrolyse de la résine polymérisée.

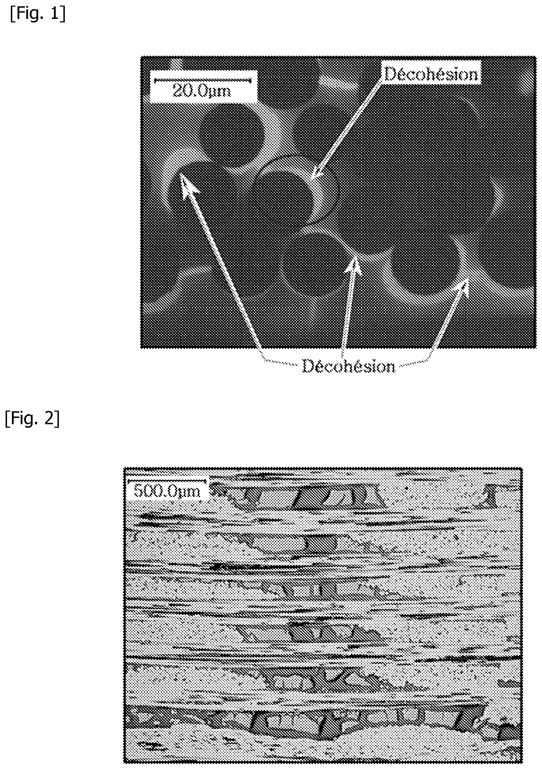

Une des limitations des propriétés mécaniques des pièces ayant une matrice obtenue par une technique PIP provient d'un problème d'adhésion aux interfaces de la matrice PIP. Les inventeurs ont, en effet, constaté l'existence de décohésions entre le précurseur de céramique à l'état polymérisé et un revêtement formé au préalable sur les fils (voir figure 1). Dans l'essai associé à la figure 1, le revêtement était une couche d'interphase de carbone pyrolytique (PyC) recouvrant les fils. La figure 2 montre, quant à elle, l'existence de décohésions entre la phase de matrice obtenue après pyrolyse du précurseur et un revêtement de carbure de silicium (SiC) formé, au préalable, sur les fils. L'existence de ces décohésions se traduit par des propriétés mécaniques sous-optimales pour les pièces obtenues, du fait d'une limitation du transfert des charges entre la matrice et le renfort fibreux. La présente invention a été développée afin de résoudre ce problème et met ainsi en oeuvre un promoteur d'adhésion permettant d'améliorer l'adhésion entre la phase de matrice PIP et un revêtement formé au préalable sur les fils. Ce revêtement formé au préalable peut être de différentes natures, comme il sera décrit plus bas.

Lorsque le promoteur d'adhésion est un acide de Lewis, il comporte une lacune électronique au niveau de l'atome X qui est destinée à être comblée par les électrons de l'oxygène des groupements -OH pendants présents à la surface du revêtement sous-jacent. Une liaison covalente est ainsi formée entre l'atome d'oxygène des groupements -OH et l'atome X lors du greffage. Il est à noter que les groupements -OH sont naturellement présents après exposition du revêtement à l'air ambiant. Une fois le greffage réalisé, les liaisons X-H du promoteur sont aptes, à réagir chimiquement avec la résine. Cette réaction permet de lier de manière covalente le promoteur à la résine précurseur de céramique.

Lorsque le promoteur d'adhésion est un complexe de Lewis, la base de Lewis B1 constitue un groupement partant lors du greffage. On forme ainsi une liaison covalente entre l'atome d'oxygène des groupements -OH et l'atome X. Les liaisons X-H du promoteur sont ensuite aptes à réagir chimiquement avec la résine comme dans le cas de l'acide de Lewis.

Le promoteur d'adhésion constitue ainsi un intermédiaire de liaison entre la résine, c'est-à-dire au final la phase de matrice PIP, et le revêtement sous-jacent, permettant ainsi d'améliorer l'adhésion de cette phase de matrice à ce revêtement. L'emploi du promoteur d'adhésion proposé par la présente invention contribue ainsi à améliorer les propriétés mécaniques de la pièce en matériau composite obtenue. En outre, la réaction du promoteur d'adhésion avec la résine précurseur de céramique permet d'augmenter son degré de réticulation et sa densité, permettant ainsi d'augmenter le rendement massique de cette résine et réduire son retrait volumique.

Dans un exemple de réalisation, X est le bore.

Une telle caractéristique est avantageuse car elle permet d'obtenir du bore dans la phase de matrice céramique après pyrolyse, améliorant ainsi la tenue thermique de la matrice. On peut en particulier obtenir une matrice céramique thermostable à 1500°C, par exemple du type SiBCN.

En variante, X peut être l'aluminium.

Une telle caractéristique est avantageuse afin d'améliorer la résistance à l'oxydation de la matrice formée.

Dans un exemple de réalisation, le promoteur d'adhésion est un complexe de Lewis de formule générale B1-BH₃ ou B1-AlH₃. B1 peut par exemple être une chaîne hydrocarbonée aliphatique ou aromatique ayant de 1 à 12 atomes de carbone, par exemple de 1 à 4 atomes de carbone. B1 peut être une chaîne hydrocarbonée linéaire ou ramifiée ayant de 1 à 12 atomes de carbone, par exemple de 1 à 4 atomes de carbone. Le promoteur d'adhésion peut être un complexe de Lewis et la base de Lewis B1 peut être de formule *-S-R₂ ou *-N-R₃, avec *- désignant la liaison à l'atome X et dans chacune de ces formules les groupements R étant identiques ou différents et étant une chaîne hydrocarbonée comportant de 1 à 12 atomes de carbone, par exemple de 1 à 4 atomes de carbone, saturée ou insaturée.

Les groupements R peuvent en particulier être choisis parmi : un groupement méthyle ou un groupement éthyle.

Le promoteur d'adhésion peut en particulier être le diméthylsulfure de borane (« borane diméthylsulfide ») ayant la formule ci-dessous :

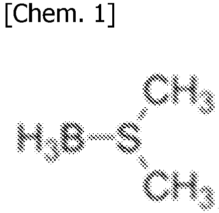

Le promoteur d'adhésion peut en particulier être la Alane N-N diméthyl amine ayant la formule ci-dessous :

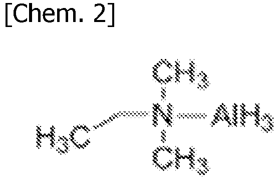

En variante, le promoteur d'adhésion est un acide de Lewis de formule générale R'₂-BH ou R'₂-AlH, dans chacune de ces formules les groupements R' étant identiques ou différents et étant un atome d'hydrogène, une chaîne hydrocarbonée comportant de 1 à 12 atomes de carbone, par exemple de 1 à 4 atomes de carbone, saturée ou insaturée, les groupements R' définissant éventuellement ensemble une même chaîne cyclique hydrocarbonée. Dans ce cas, le promoteur d'adhésion peut en particulier être le 9-Borabicyclo[3.3.1]nonane ayant la formule ci-dessous :

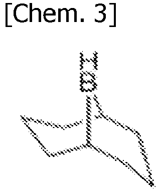

Dans un exemple de réalisation, la résine précurseur de céramique comprend au moins une fonction réactive réagissant avec la liaison X-H du promoteur d'adhésion greffé lors de l'étape d) et choisie parmi : une double liaison carbone-carbone, un groupement N-H, un groupement Si-H, un groupement -OH.

En particulier, la fonction réactive peut être un groupement allyle ou un groupement vinyle.

Dans un exemple de réalisation, le procédé comprend en outre, avant introduction du promoteur, une étape de formation du revêtement sur les fils par dépôt ou infiltration chimique en phase vapeur (« Chemical Vapor Déposition » ou « Chemical Vapor Infiltration » ; « CVD » ou « CVI »).

Dans ce cas, le revêtement peut être une interphase ou une phase de matrice préliminaire. Dans cet exemple, l'emploi du promoteur d'adhésion améliore l'adhésion de la phase de matrice PIP formée directement sur ce revêtement.

En variante, le procédé comprend en outre, avant introduction du promoteur, une étape de formation du revêtement sur les fils par introduction d'un composé précurseur dans la porosité de la préforme et pyrolyse de ce composé précurseur. Dans ce cas, le revêtement constitue une phase de matrice préliminaire PIP et l'emploi du promoteur d'adhésion améliore l'adhésion entre deux blocs de matrice PIP formés successivement. On notera que lorsque la matrice est formée à partir d'une pluralité de blocs de matrice PIP, il est possible de mettre en oeuvre le procédé décrit plus haut afin d'améliorer l'adhésion entre chacun de ces blocs.

Dans un exemple de réalisation, le matériau formant la surface du revêtement est choisi parmi : le carbone, le carbone dopé au bore, le carbure de silicium, le nitrure de bore, le nitrure de bore dopé au silicium ou le nitrure de silicium.

Dans un exemple de réalisation, la résine est choisie parmi : les résines polysiloxane, les résines polysilazane, les résines polycarbosiloxane, les résines polycarbosilane, les résines polycarbosilazane et les mélanges de telles résines.

### Brève description des dessins

[Fig. 1] La figure 1 est une photographie montrant l'existence de décohésions entre un précurseur céramique à l'état polymérisé et un revêtement de PyC formé sur des fils (hors invention).
[Fig. 2] La figure 2 est une photographie montrant l'existence de décohésions entre une phase de matrice PIP et un revêtement de SiC formé sur des fils (hors invention).
[Fig. 3] La figure 3 illustre de manière schématique une étape d'un premier exemple de procédé selon l'invention.
[Fig. 4] La figure 4 illustre de manière schématique une étape du premier exemple de procédé selon l'invention.
[Fig. 5] La figure 5 illustre de manière schématique une étape du premier exemple de procédé selon l'invention.
[Fig. 6] La figure 6 illustre de manière schématique une étape du premier exemple de procédé selon l'invention.
[Fig. 7] La figure 7 illustre de manière schématique une étape d'un deuxième exemple de procédé selon l'invention.
[Fig. 8] La figure 8 illustre de manière schématique une étape du deuxième exemple de procédé selon l'invention.
[Fig. 9] La figure 9 illustre de manière schématique une étape du deuxième exemple de procédé selon l'invention.
[Fig. 10] La figure 10 illustre de manière schématique une étape du deuxième exemple de procédé selon l'invention.

### Description des modes de réalisation

Dans un premier temps, une préforme fibreuse formée de fils réfractaires, comme des fils céramiques ou carbone, est formée.

La préforme peut par exemple être formée de fils de carbure de silicium fournis par la société japonaise NGS sous la référence « Nicalon », « Hi-Nicalon » ou encore « Hi-Nicalon Type S ». Les fils de carbone utilisables pour former cette préforme sont, par exemple, fournis sous la dénomination Torayca T300 3K par la société Toray.

La préforme fibreuse est obtenue à partir d'au moins une opération textile. La préforme fibreuse est destinée à constituer le renfort fibreux de la pièce à obtenir. La préforme fibreuse peut, en particulier, être obtenue par tissage multicouches ou tridimensionnel.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications.

La préforme fibreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former la préforme fibreuse sont décrits dans le document WO 2006/136755.

Il est aussi possible de former d'abord des textures fibreuses telles que des tissus bidimensionnels ou des nappes unidirectionnelles, et d'obtenir la préforme fibreuse par drapage de telles textures fibreuses sur une forme. Ces textures peuvent éventuellement être liées entre elles par exemple par couture ou implantation de fils pour former la préforme fibreuse.

Le revêtement est ensuite formé sur les fils de la préforme. Ce revêtement peut être une interphase ou comporter une ou plusieurs phases de matrice densifiant partiellement la préforme fibreuse. Le revêtement peut être en carbone, en particulier en PyC, en carbone dopé au bore (BC, avec du bore en une proportion atomique comprise entre 5% et 20%, le complément étant du carbone) ou en matériau céramique, comme le carbure de silicium, le nitrure de bore (BN), le nitrure de bore dopé au silicium (BN(Si), avec du silicium en une proportion massique comprise entre 5% et 40%, le complément étant du nitrure de bore) ou le nitrure de silicium (Si₃N₄).

Le revêtement peut ainsi être formé par une interphase monocouche ou multicouches. Auquel cas, la surface de l'interphase présente les groupements -OH destinés à permettre le greffage du promoteur d'adhésion. Cette interphase peut comporter au moins une couche de carbone pyrolytique, de nitrure de bore, de nitrure de bore dopé au silicium ou de carbone dopé au bore.

L'interphase a ici une fonction de défragilisation du matériau composite qui favorise la déviation de fissures éventuelles parvenant à l'interphase après s'être propagées dans la matrice, empêchant ou retardant la rupture des fils par de telles fissures. L'épaisseur de l'interphase peut être comprise entre 10 nm et 1000 nm, et par exemple entre 10 nm et 100 nm. L'interphase peut être formée par CVI sur les fils de la préforme.

On pourrait, en variante, former l'interphase par dépôt chimique en phase vapeur sur les fils avant formation de la préforme, puis former cette préforme à partir des fils ainsi revêtus.

En variante, le revêtement peut comporter au moins une phase de matrice préliminaire et éventuellement une interphase interposée entre ladite au moins une phase de matrice préliminaire et les fils. Auquel cas, la phase de matrice préliminaire externe, i.e. la plus éloignée des fils de la préforme, présente sur sa surface les groupements -OH destinés à permettre le greffage du promoteur d'adhésion.

La phase de matrice préliminaire externe peut être formée par différentes méthodes connues en soi, comme la CVI, l'infiltration de silicium à l'état fondu (procédé de « Melt-Infiltration ») ou par une technique PIP. On notera donc que, dans ce dernier cas, le promoteur d'adhésion permet d'améliorer l'adhésion entre deux blocs de matrice PIP successifs. La phase de matrice préliminaire externe peut être céramique ou en carbone. La phase de matrice préliminaire externe peut être en carbone, voire en PyC, en carbure de silicium, en nitrure de bore ou en nitrure de silicium.

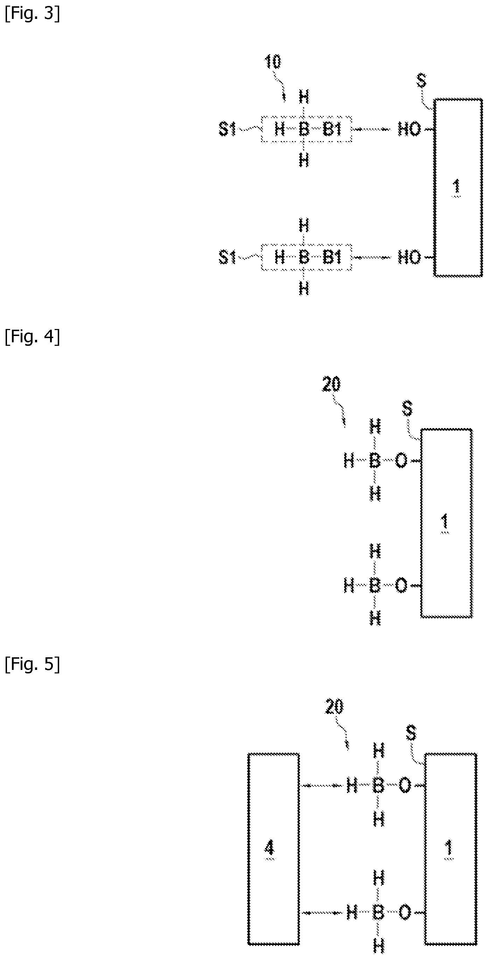

Bien entendu, la préforme fibreuse reste poreuse, après formation du revêtement, afin de permettre la formation d'une phase de matrice céramique PIP reliée au revêtement par l'intermédiaire du promoteur d'adhésion. Cet aspect va, à présent, être décrit au travers d'un premier exemple de procédé selon l'invention, illustré aux figures 3 à 6.

Après formation du revêtement 1 sur les fibres, le promoteur d'adhésion 10 est introduit dans la porosité résiduelle de la préforme fibreuse (voir figure 3). Le promoteur d'adhésion 10 peut être introduit à l'état liquide dans la porosité de la préforme fibreuse. Le promoteur d'adhésion 10 peut être injecté dans la porosité de la préforme fibreuse. Le milieu liquide introduit comprenant le promoteur d'adhésion 10 peut remplir l'intégralité de la porosité accessible de la préforme fibreuse. Le promoteur d'adhésion 10 introduit est au contact de la surface S du revêtement 1 portant les groupements -OH. Cette surface S correspond à la surface externe du revêtement 1, i.e. à la surface la plus éloignée des fils formant la préforme. Dans l'exemple illustré, le promoteur d'adhésion 10 est un complexe de Lewis à base de bore de formule générale B1-BH₃ où B1 désigne une base de Lewis. D'autres exemples possibles de complexes de Lewis ont été indiqués plus haut. Pour des raisons de concision, les figures n'illustrent qu'un promoteur d'adhésion au bore mais le même principe reste applicable lorsque le promoteur est à base d'aluminium.

Le promoteur d'adhésion comprend en particulier une structure réactive S1 de formule B1-B-H. La partie B1-B (liaison bore - base de Lewis) est destinée à réagir avec l'oxygène des groupements -OH, et la partie B-H (liaison bore - hydrogène) est destinée à réagir avec la résine précurseur de céramique.

Un premier chauffage peut être réalisé afin de greffer le promoteur 10 sur la surface S du revêtement 1. Ce chauffage n'est toutefois pas obligatoire, une mise en contact à température ambiante (20°C) ou à une température inférieure peut être suffisante pour greffer le promoteur au revêtement des fibres. La température imposée lors du greffage peut être comprise entre -50°C et +60°C, par exemple entre -20°C et +30°C. Le promoteur 10 et les groupements -OH sont mis en contact pendant une durée suffisante pour réaliser le greffage. Cette durée dépend de la nature chimique du promoteur choisi. A titre d'exemple, le promoteur 10 et les groupements -OH peuvent être mis en contact pendant une durée supérieure ou égale à 2 heures, par exemple supérieure ou égale à 3 heures, pour réaliser le greffage. L'introduction du promoteur d'adhésion 10 et le greffage peuvent être effectués sous atmosphère inerte ou sous vide. Lors de ce greffage, le bore s'additionne sur l'oxygène des groupements -OH et il y a départ de la base de Lewis B1. Le promoteur greffé 20 est lié à la surface S du revêtement 1 par une liaison covalente entre l'oxygène des groupements -OH et le bore (voir figure 4).

Après greffage, le promoteur greffé 20 présente toujours au moins une liaison bore-hydrogène (B-H) pendante destinée à réagir avec la résine précurseur de céramique (voir figure 4).

Une fois le promoteur d'adhésion 20 greffé, une résine 4 précurseur de céramique est introduite dans la porosité de la préforme fibreuse (voir figure 5). La résine 4 introduite est au contact du promoteur greffé 20. La résine 4 peut être introduite à l'état liquide dans la porosité de la préforme fibreuse. La résine 4 peut être injectée dans la porosité de la préforme fibreuse. Cette résine 4 est connue en soi, et peut être choisie parmi : les résines polysiloxane, les résines polysilazane, les résines polycarbosiloxane, les résines polycarbosilane, les résines polycarbosilazane et les mélanges de telles résines.

Une fois la résine 4 introduite, celle-ci va se lier, de manière covalente, au promoteur greffé 20. Cette liaison est réalisée par une réaction chimique entre la liaison B-H et une fonction réactive portée par la résine 4. A titre d'exemple, la fonction réactive de la résine peut être un groupement N-H qui peut réagir avec la liaison B-H du promoteur par une réaction de déshydrocouplage pour former une liaison B-N. C'est par exemple le cas lorsque la résine est une résine polysilazane, telle que celle commercialisée sous la référence « Durazane 1800 » commercialisée par Merck. Selon un autre exemple, on peut utiliser une résine comprenant une double liaison carbone-carbone comme fonction réactive qui est apte à réagir avec la liaison B-H du promoteur par une réaction d'hydroboration suivie d'un déshydrocouplage afin de former une liaison B-C. C'est par exemple le cas lorsque la résine est une résine polycarbosilane, telle que celle commercialisée sous la référence « SMP-10 » par Starfire^{®} Systems. Quel que soit le mode de réalisation considéré, la réaction chimique entre la résine introduite et le promoteur d'adhésion greffé peut comprendre une réaction de déshydrocouplage, éventuellement précédée par une réaction d'hydroboration.

La liaison de la résine 4 au promoteur greffé 20 est effectuée en réalisant un deuxième chauffage. Le deuxième chauffage permet, à la fois, de polymériser la résine 4 et d'activer la réaction de liaison de celle-ci au promoteur greffé 20. Il va des connaissances générales de l'homme du métier de déterminer la valeur de température à imposer durant le deuxième chauffage en fonction de la résine et du promoteur greffé 20 mis en oeuvre. Une température comprise entre 90°C et 250°C peut typiquement être imposée durant le deuxième chauffage.

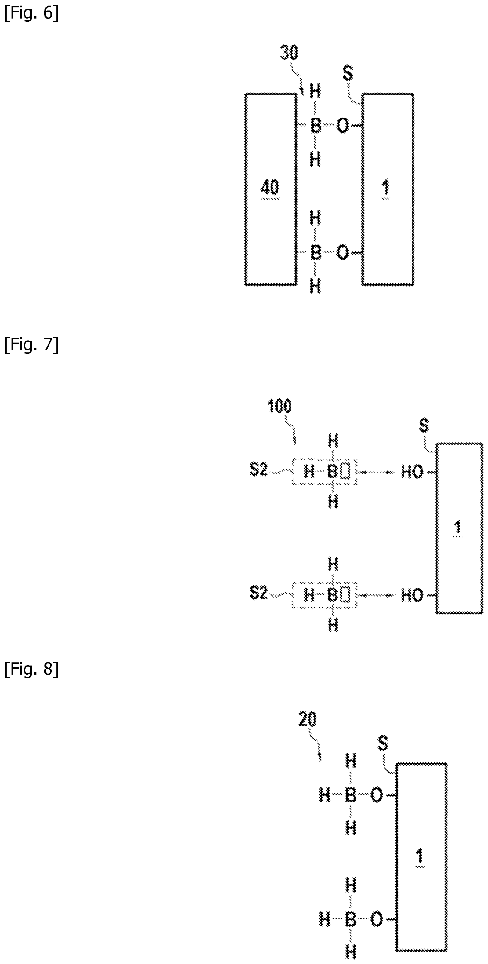

La figure 6 montre la liaison de la résine polymérisée 40 au promoteur greffé 30. Le promoteur greffé 30 forme un bras de liaison entre la résine polymérisée 40 et le revêtement 1. La résine polymérisée 40 est alors pyrolysée afin de former une phase de matrice céramique dans la porosité de la préforme fibreuse.

Il est à noter que la formation de la matrice de la pièce peut impliquer la réalisation de plusieurs cycles PIP d'introduction et pyrolyse d'une résine précurseur de céramique. Auquel cas, on peut greffer un promoteur d'adhésion à un bloc de matrice obtenu par PIP avant chaque nouvelle introduction de la résine précurseur de céramique. Dans ce cas, le promoteur d'adhésion relie les différents blocs de matrice PIP, afin d'améliorer l'adhésion de ces blocs entre eux.

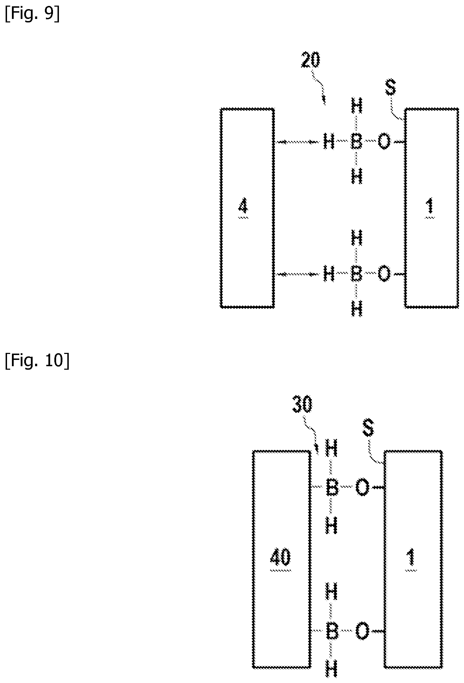

Les figures 7 à 10 sont analogues aux figures 3 à 6 et concernent le cas où le promoteur d'adhésion 100 est un acide de Lewis, ici BH₃. Le promoteur d'adhésion 100 comprend une structure réactive S2 de formule B-H avec B présentant une lacune électronique schématisée par le rectangle vide à la figure 7. L'oxygène des groupements -OH est destiné à venir combler cette lacune électronique, et la partie B-H est destinée à réagir avec la résine précurseur de céramique. On obtient ainsi un promoteur 20 greffé à la surface du revêtement 1 (figure 8). L'interaction et la réaction du promoteur greffé 20 avec la résine 4 illustrée aux figures 9 et 10 se déroule de la même manière que décrit précédemment.

Une fois obtenue, la pièce ainsi fabriquée peut être une pièce pour application aéronautique ou aérospatiale. La pièce peut être une pièce de partie chaude d'une turbine à gaz d'un moteur aéronautique ou aérospatial ou d'une turbine industrielle. La pièce peut être une pièce de turbomachine. La pièce peut constituer une partie au moins d'un distributeur, une partie au moins d'une tuyère ou d'un revêtement de protection thermique, une paroi d'une chambre de combustion, un secteur d'anneau de turbine ou une aube de turbomachine.

### Exemple

Durant le procédé d'imprégnation, la préforme fibreuse est maintenue dans un moule étanche sous atmosphère inerte. La préforme fibreuse était en fibres de SiC (Hi-Nicalon S) revêtues d'une matrice SiC obtenue par CVI. Préalablement à l'ajout du polymère, la préforme fibreuse est imprégnée par une quantité contrôlée de diméthylsulfure de borane (2M dans du toluène, Sigma Aldrich). Le diméthylsulfure de borane est maintenu en contact avec les fibres revêtues pendant 12 heures à 20°C puis l'ensemble est mis sous vide dynamique afin d'évacuer le solvant, i.e., toluène qui est condensé dans un piège plongé dans l'azote liquide. Après évaporation du solvant, le moule est mis sous vide statique pour imprégner la préforme fibreuse par le polymère précéramique (Durazane 1800). Après imprégnation du polymère, l'ensemble est maintenu sous vide dynamique puis est mis sous argon pour être traité thermiquement jusqu'à 130°C (température de solidification du polymère) avant refroidissement pour démouler la préforme fibreuse imprégnée du polymère.

L'expression « comprise entre ... et ... » doit se comprendre comme incluant les bornes.

## Revendications

1. Procédé de fabrication d'une pièce en matériau composite comprenant au moins les étapes suivantes :
a) introduction d'un promoteur d'adhésion (10 ; 100) dans la porosité d'une préforme fibreuse formée par des fils revêtus par un revêtement (1) présentant à sa surface (S) des groupements -OH, le promoteur d'adhésion étant un complexe de Lewis ou un acide de Lewis, le promoteur d'adhésion complexe de Lewis (10) comprenant une structure S1 réactive de formule B1-X-H où B1 est une base de Lewis, le promoteur d'adhésion acide de Lewis (100) comprenant une structure S2 réactive de formule X-H avec l'atome X présentant une lacune électronique, dans ces deux alternatives X désigne le bore ou l'aluminium,
b) greffage du promoteur d'adhésion à la surface du revêtement par addition sur les groupements -OH au niveau de l'atome X,
c) introduction d'une résine (4) précurseur de céramique dans la porosité de la préforme fibreuse, après l'étape de greffage du promoteur d'adhésion,
d) polymérisation de la résine introduite et liaison du promoteur d'adhésion greffé à la résine par réaction chimique entre ces deux composés au niveau d'une liaison X-H du promoteur greffé, cette polymérisation et cette liaison étant réalisées par chauffage de la préforme fibreuse dans laquelle a été introduite la résine,
e) formation d'une phase de matrice céramique dans la porosité de la préforme fibreuse par pyrolyse de la résine polymérisée (40).

2. Procédé selon la revendication 1, dans lequel X est le bore.

3. Procédé selon la revendication 1 ou 2, dans lequel le promoteur d'adhésion est un complexe de Lewis de formule générale B1-BH₃ ou B1-AlH₃.

4. Procédé selon l'une quelconque des revendications 1 à 3, dans lequel le promoteur d'adhésion (10) est un complexe de Lewis et dans lequel la base de Lewis B1 est de formule *-S-R₂ ou *-N-R₃, avec *- désignant la liaison à l'atome X et dans chacune de ces formules les groupements R étant identiques ou différents et étant une chaîne hydrocarbonée comportant de 1 à 12 atomes de carbone, saturée ou insaturée.

5. Procédé selon l'une quelconque des revendications 1 à 3, dans lequel le promoteur d'adhésion (100) est un acide de Lewis de formule générale R'₂-BH ou R'₂-AlH, dans chacune de ces formules les groupements R' étant identiques ou différents et étant un atome d'hydrogène, une chaîne hydrocarbonée comportant de 1 à 12 atomes de carbone, saturée ou insaturée, les groupements R' définissant éventuellement ensemble une même chaîne cyclique hydrocarbonée.

6. Procédé selon l'une quelconque des revendications 1 à 5, dans lequel la résine (4) précurseur de céramique comprend au moins une fonction réactive réagissant avec la liaison X-H du promoteur d'adhésion greffé lors de l'étape d) et choisie parmi : une double liaison carbone-carbone, un groupement N-H, un groupement Si-H, un groupement OH.

7. Procédé selon la revendication 6, dans lequel la fonction réactive est un groupement allyle ou un groupement vinyle.

8. Procédé selon l'une quelconque des revendications 1 à 7, dans lequel le matériau formant la surface (S) du revêtement (1) est choisi parmi : le carbone, le carbone dopé au bore, le carbure de silicium, le nitrure de bore, le nitrure de bore dopé au silicium ou le nitrure de silicium.

9. Procédé selon l'une quelconque des revendications 1 à 8, dans lequel la résine (4) est choisie parmi : les résines polysiloxane, les résines polysilazane, les résines polycarbosiloxanes, les résines polycarbosilane, les résines polycarbosilazane et les mélanges de telles résines.

## Patentansprüche

1. Verfahren zur Herstellung eines Teils aus einem Verbundwerkstoff, umfassend mindestens die folgenden Schritte:
a) Einbringen eines Haftvermittlers (10; 100) in die Porosität einer faserigen Vorform, die aus Fäden gebildet ist, die mit einer Beschichtung (1) beschichtet sind, die auf ihrer Oberfläche (S) -OH-Gruppen aufweist, wobei der Haftvermittler ein Lewis-Komplex oder eine Lewis-Säure ist, wobei der Lewis-Komplex-Haftvermittler (10) eine reaktive Struktur S1 der Formel B1-X-H umfasst, wobei B1 eine Lewis-Base ist, wobei der Lewis-Säure-Haftvermittler (100) eine reaktive Struktur S2 der Formel X-H umfasst, wobei das X-Atom eine elektronische Lücke aufweist, wobei in diesen zwei Alternativen X Bor oder Aluminium bezeichnet,
b) Aufpfropfen des Haftvermittlers auf die Oberfläche der Beschichtung durch Hinzufügung an die -OH-Gruppen auf der Ebene des X-Atoms,
c) Einbringen eines keramischen Vorläuferharzes (4) in die Porosität der faserigen Vorform nach dem Schritt des Aufpfropfens des Haftvermittlers,
d) Polymerisieren des eingebrachten Harzes und Binden des auf das Harz aufgepfropften Haftvermittlers durch chemische Reaktion zwischen diesen zwei Verbindungen auf der Ebene einer X-H-Bindung des aufgepfropften Promotors, wobei dieses Polymerisieren und dieses Binden durch Erhitzen der faserigen Vorform, in die das Harz eingebracht wurde, umgesetzt werden,
e) Bilden einer keramischen Matrixphase in der Porosität der faserigen Vorform durch Pyrolyse des polymerisierten Harzes (40).

2. Verfahren nach Anspruch 1, wobei X Bor ist.

3. Verfahren nach Anspruch 1 oder 2, wobei der Haftvermittler ein Lewis-Komplex der allgemeinen Formel B1-BH₃ oder B1-AlH₃ ist.

4. Verfahren nach einem der Ansprüche 1 bis 3, wobei der Haftvermittler (10) ein Lewis-Komplex ist und wobei die Lewis-Base B1 die Formel *-S-R₂ oder *-N-R₃ aufweist, wobei *- die Bindung an das X-Atom bezeichnet und wobei in jeder dieser Formeln die R-Gruppen gleich oder verschieden sind und eine Kohlenwasserstoffkette sind, die 1 bis 12 Kohlenstoffatome, gesättigt oder ungesättigt, beinhaltet.

5. Verfahren nach einem der Ansprüche 1 bis 3, wobei der Haftvermittler (100) eine Lewis-Säure der allgemeinen Formel R'₂-BH oder R'₂-AlH ist, wobei in jeder dieser Formeln die R'-Gruppen gleich oder verschieden sind und ein Wasserstoffatom, eine Kohlenwasserstoffkette sind, die 1 bis 12 Kohlenstoffatome, gesättigt oder ungesättigt, beinhaltet, wobei die R'-Gruppen optional zusammen eine gleiche zyklische Kohlenwasserstoffkette definieren.

6. Verfahren nach einem der Ansprüche 1 bis 5, wobei das keramische Vorläuferharz (4) mindestens eine reaktive Funktion umfasst, die mit der Bindung X-H des in Schritt d) gepfropften Haftvermittlers reagiert und ausgewählt ist aus: einer Kohlenstoff-Kohlenstoff-Doppelbindung, einer N-H-Gruppe, einer Si-H-Gruppe, einer OH-Gruppe.

7. Verfahren nach Anspruch 6, wobei die reaktive Funktion eine Allylgruppe oder eine Vinylgruppe ist.

8. Verfahren nach einem der Ansprüche 1 bis 7, wobei das Material, das die Oberfläche (S) der Beschichtung (1) bildet, ausgewählt ist aus: Kohlenstoff, mit Bor dotiertem Kohlenstoff, Siliziumkarbid, Bornitrid, mit Silizium dotiertem Bornitrid oder Siliziumnitrid.

9. Verfahren nach einem der Ansprüche 1 bis 8, wobei das Harz (4) ausgewählt ist aus: Polysiloxanharzen, Polysilazanharzen, Polycarbosiloxanharzen, Polycarbosilanharzen, Polycarbosilazanharzen und Mischungen solcher Harze.

## Claims

1. A method for manufacturing a part made of composite material comprising at least the following steps:
a) introducing an adhesion promoter (10; 100) into the pores of a fibrous preform formed by yarns coated by a coating (1) having -OH groups at its surface (S), the adhesion promoter being a Lewis complex or a Lewis acid, the Lewis complex adhesion promoter (10) comprising a reactive structure S1 of formula B1-X-H, where B1 is a Lewis base, the Lewis acid adhesion promoter (100) comprising a reactive structure S2 of formula X-H with the atom X having an empty orbital, in these two alternatives, X designates boron or aluminium,
b) grafting the adhesion promoter to the surface of the coating by addition on the -OH groups at the atom X,
c) introducing a ceramic precursor resin (4) into the pores of the fibrous preform, after the step of grafting the adhesion promoter,
d) polymerising the introduced resin and bonding the grafted adhesion promoter to the resin by chemical reaction between these two compounds at the X-H bond of the grafted promoter, this polymerisation and this bonding being carried out by heating the fibrous preform into which the resin has been introduced,
e) forming a ceramic matrix phase in the pores of the fibrous preform by pyrolysis of the polymerised resin (40).

2. The method according to claim 1, wherein X is boron.

3. The method according to claim 1 or 2, wherein the adhesion promoter is a Lewis complex of general formula B1-BH₃ or B1-AlH₃.

4. The method according to any one of claims 1 to 3, wherein the adhesion promoter (10) is a Lewis complex and wherein the Lewis base B1 is of formula *-S-R₂ or *-N-R₃, with *- designating the bond to the atom X and in each of these formulas the R groups being identical or different and being a saturated or unsaturated hydrocarbon chain containing 1 to 12 carbon atoms.

5. The method according to any one of claims 1 to 3, wherein the adhesion promoter (100) is a Lewis acid of general formula R'₂-BH or R'₂-AlH, in each of these formulas the R' groups being identical or different and being a hydrogen atom, a saturated or unsaturated hydrocarbon chain containing 1 to 12 carbon atoms, the R' groups optionally together defining a same cyclic hydrocarbon chain.

6. The method according to any one of claims 1 to 5, wherein the ceramic precursor resin (4) comprises at least one reactive function reacting with the X-H bond of the adhesion promoter grafted during step d) and chosen from: a carbon-carbon double bond, an N-H group, an Si-H group or an OH group.

7. The method according to claim 6, wherein the reactive function is an allyl group or a vinyl group.

8. The method according to any one of claims 1 to 7, wherein the material forming the surface (S) of the coating (1) is chosen from: carbon, boron-doped carbon, silicon carbide, boron nitride, boron nitride doped with silicon or silicon nitride.

9. The method according to any one of claims 1 to 8, wherein the resin (4) is chosen from: polysiloxane resins, polysilazane resins, polycarbosiloxane resins, polycarbosilane resins, polycarbosilazane resins and the mixtures of such resins.
